# DEMANDE DE BREVET EUROPEEN

(11) **EP 4 675 043 A1**
(43) Date de publication de la demande: **07.01.2026**
(21) Numéro de dépôt: 25187217.2
(22) Date de dépôt: 03.07.2025
(51) Int. Cl.: E01B 31/04, E01B 31/02, E01B 31/06, B23D 45/00, B23D 45/04

(54) **DISPOSITIF DE RÉGLAGE DE COURSE ANGULAIRE ET SYSTÈME DE SUPPORT ET DE GUIDAGE POUR TRONÇONNEUSE DE RAIL**

(30) Priorité: 04.07.2024 FR 2407310
(71) Demandeur: GEISMAR Rail Industry Technologies & Services SAS, 68000 Colmar (FR)
(72) Inventeur: BEN DRISS-TORRES, Vincent, 38630 Les Avenières (FR); LY VU, Edouard, 38690 Biol (FR); COINTOT, Maxime, 38490 Saint André le Gaz (FR); CARCO, Romain, 38110 Dolomieu (FR)
(74) Mandataire: Germain Maureau

(57) **Abrégé**

Dispositif de réglage de course angulaire (10) pour système de support et de guidage (1) comprenant un bras principal (3) et un bras de support (5), le dispositif de réglage de course angulaire (10) comprenant un organe de blocage (20) présentant une première surface d'arrêt (21) et une deuxième surface d'arrêt (23) définissant entre elles un secteur angulaire de support (s22), un organe d'actionnement (30) solidaire en pivotement avec le bras de support (5) et configuré pour occuper une configuration de support (cs1, cs2, cs3), et un membre de transfert (40) solidaire avec le bras principal (3) et configuré limiter en pivotement le bras principal (3) dans le secteur angulaire de support (s22), lorsque le membre de transfert (40) coopère avec l'organe d'actionnement (30) dans la configuration de support (cs1, cs2, cs3); et également un système de support et de guidage (1) comprenant un tel dispositif de réglage de course angulaire (10).

## Description

### Domaine technique de l'invention

La présente invention concerne le domaine des équipements d'entretien, de pose et de maintenance de chemin de fer.

Plus particulièrement, l'invention concerne un dispositif de réglage de course angulaire destiné à équiper un système de support et de guidage pour tronçonneuse de rails de voie de chemin de fer ou analogues.

### Etat de la technique

Il est connu de l'état de la technique le brevet français FR 2267418 qui décrit un dispositif de support et de guidage pour tronçonneuse qui comprend un étau de fixation à un rail solidaire d'un bras principal à l'extrémité duquel est articulé autour d'un arbre d'articulation horizontal, un bras de support sur lequel est finalement articulée la tronçonneuse.

Les dimensions du rail ne permettant pas, le plus souvent, de réaliser la coupe en une seule passe, il est nécessaire de permettre à un opérateur d'attaquer le rail d'un côté puis de l'autre, pour découper le rail dans de bonnes conditions. En particulier, il est fréquent que l'opérateur attaque tout d'abord la découpe par la partie haute du rail en s'appuyant globalement au-dessus du rail, puis de terminer la coupe du rail transversalement.

Lors de la découpe de la partie haute du rail, il est préférable d'avoir une amplitude relativement large de déplacement de la tronçonneuse pour que la coupe du rail soit facilitée, mais également pour ne pas abimer le disque de tronçonnage pendant la coupe. Lors de cette première étape, étant donné que la tronçonneuse s'appuie en partie sur le rail, son poids est soutenu en partie par le rail, ce qui facilite le travail de l'opérateur.

Toutefois, afin de ne pas risquer de faire glisser la tronçonneuse et blesser l'opérateur, il est connu de l'état de la technique de prévoir des éléments de butées angulaires qui viennent bloquer en pivotement le bras principal du dispositif de support et de guidage.

Pour réaliser la deuxième partie de la coupe du rail, transversalement à l'axe d'élongation de celui-ci, l'opérateur doit supporter davantage le poids de la tronçonneuse car celle-ci ne s'appuie plus sur le rail.

Afin de soulager l'opérateur, il a donc été prévu sur des dispositifs de support et de guidage, des moyens de bloquer le bras principal fixe par rapport à l'étau.

Bien que cette solution donne satisfaction en ce qu'elle permette de supporter le poids de la tronçonneuse, elle ne permet pas d'avoir une amplitude angulaire de coupe suffisante pour terminer la coupe du rail. Par ailleurs, fixer le bras principal en position fixe implique généralement d'agir sur une partie du dispositif de support et de guidage à proximité du disque de coupe, ce qui peut être dangereux pour l'utilisateur.

Pour tenir compte de ces deux contraintes, il a été proposé d'utiliser des dispositifs de support et de guidage comprenant plusieurs gammes de secteurs angulaires pour permettre le pivotement du bras principal en fonction des différentes phases de coupe. Dans ce cas, l'opérateur peut placer le bras principal dans l'un de ces secteurs angulaires pour définir l'amplitude nécessaire à la coupe pendant la phase de coupe correspondante.

Toutefois, de la même manière que lorsqu'on fixe le bras principal par rapport à l'étau de fixation, la sélection du secteur angulaire est toujours manuelle et nécessite de toucher à des éléments du dispositif de support et de guidage à proximité du disque de coupe.

Il existe donc un besoin de trouver un dispositif de support et de guidage dans lequel l'adaptation des amplitudes de coupe est automatisé et sans risque pour l'opérateur.

### Objet de l'invention

La présente invention a pour but de proposer une solution qui réponde à tout ou partie des problèmes précités.

Ce but peut être atteint grâce à la mise en oeuvre d'un dispositif de réglage de course angulaire destiné à équiper un système de support et de guidage pour tronçonneuse de rails, ledit système de support et de guidage comprenant un étau de fixation au rail, un bras principal articulé monté pivotant par rapport à l'étau de fixation autour d'au moins un axe principal, et un bras de support comprenant d'une part une portion de fixation destinée à permettre la fixation de la tronçonneuse de rails et d'autre part une portion d'articulation montée pivotante par rapport au bras principal autour d'un axe d'articulation, le dispositif de réglage de course angulaire comprenant :
- un organe de blocage présentant au moins une première surface d'arrêt et au moins une deuxième surface d'arrêt, une première surface d'arrêt et une deuxième surface d'arrêt définissant entre elles un secteur angulaire de support ;
- un organe d'actionnement destiné à être solidaire en pivotement avec le bras de support et à être disposé au niveau de la portion d'articulation du bras de support, l'organe d'actionnement étant configuré pour occuper, par variation angulaire par rapport au bras principal, au moins une configuration de support ou une configuration de libération, où chaque configuration de support correspond à un secteur angulaire de support ; et
- un membre de transfert destiné à être solidaire en pivotement avec le bras principal et coopérant d'une part avec l'organe d'actionnement et d'autre part avec l'organe de blocage, le membre de transfert étant configuré pour prendre appui sur la première surface d'arrêt ou sur la deuxième surface d'arrêt de sorte à limiter en pivotement le bras principal dans le secteur angulaire de support correspondant, lorsque le membre de transfert coopère avec l'organe d'actionnement dans la configuration de support correspondant audit secteur angulaire de support, et étant configuré pour permettre un pivotement libre du bras principal autour de l'axe principal lorsque le membre de transfert coopère avec l'organe d'actionnement dans la configuration de libération.

Les dispositions précédemment décrites permettent de proposer un dispositif de réglage de course angulaire permettant de bloquer le bras principal du système de support et de guidage dans un secteur angulaire restreint, ce qui permet de supporter au moins partiellement le poids de la tronçonneuse de rail lorsqu'elle effectue des mouvements transversaux par rapport à une direction d'élongation du rail. Le travail de l'utilisateur de la tronçonneuse de rails est donc facilité, moins pénible, et plus sécuritaire.

Le dispositif de réglage de course angulaire peut en outre présenter une ou plusieurs des caractéristiques suivantes, prises seules ou en combinaison.

Selon un mode de réalisation, le secteur angulaire de support s'étend autour d'un axe vertical correspondant à la direction de la gravité.

Ainsi, il est possible de maximiser le support du poids de la tronçonneuse par le bras principal.

Par exemple le secteur angulaire de support est centré par rapport à l'axe vertical.

Selon un mode de réalisation, une valeur du secteur angulaire de support est comprise entre 15° et 30°, et plus particulièrement entre 18° et 22°, et notamment sensiblement égale à 20°.

Ainsi, il est possible de garantir une amplitude de mouvement suffisante pour opérer une découpe du rail, tout en limitant suffisamment en pivotement le bras principal pour supporter une plus grande partie du poids de la tronçonneuse de rails.

Selon un mode de réalisation, l'organe de blocage comprend une pluralité de secteurs angulaires de support, définis chacun respectivement par une première surface d'arrêt et une deuxième surface d'arrêt.

Par exemple, l'organe de blocage comprend :
- un secteur angulaire de support étendu, défini par une première surface d'arrêt externe et une deuxième surface d'arrêt externe ;
- un secteur angulaire de support intermédiaire strictement plus petit que le secteur angulaire de support étendu, et défini par une première surface d'arrêt intermédiaire et une deuxième surface d'arrêt intermédiaire ; et
- un secteur angulaire de support restreint plus petit que le secteur angulaire de support intermédiaire, et défini par une première surface d'arrêt interne et une deuxième surface d'arrêt interne.

Selon un mode de réalisation, le secteur angulaire de support étendu est sensiblement égal à 65°, le secteur angulaire de support intermédiaire est sensiblement égal à 45°, et le secteur angulaire de support restreint est sensiblement égal à 22°.

Selon un mode de réalisation, au moins un élément choisi parmi l'organe de blocage, l'organe d'actionnement et le membre de transfert comprend de l'acier.

De cette manière, il est possible de proposer un dispositif de réglage de course angulaire plus résistant mécaniquement, ce qui permet de supporter la masse de la tronçonneuse de rails.

Selon un mode de réalisation, l'organe de blocage comprend une plaque métallique comprenant un décrochement, ledit décrochement formant d'une part la première surface d'arrêt et d'autre part la deuxième surface d'arrêt.

Selon un mode de réalisation, ladite plaque métallique s'étend dans un plan d'extension sensiblement perpendiculaire à l'axe principal.

De cette manière, l'organe de blocage présente un encombrement plus faible, et un poids réduit.

De manière avantageuse, la plaque métallique est une plaque en acier. Ainsi, il est possible de proposer un organe de blocage qui soit à la fois compact et résistant pour supporter le blocage du bras principal lorsqu'il s'appuie sur la première surface d'arrêt ou sur la deuxième surface d'arrêt lors de la coupe du rail.

Selon un mode de réalisation le plan d'extension est perpendiculaire à un axe d'élongation du rail.

Selon un mode de réalisation, le membre de transfert comprend une tige d'insertion, mobile en translation selon une direction radiale définie perpendiculairement à l'axe principal, ladite tige d'insertion étant configurée pour faire saillie vers l'organe de blocage entre la première surface d'arrêt et la deuxième surface d'arrêt lorsque le membre de transfert coopère avec l'organe d'actionnement dans la configuration de support, et pour se rétracter hors de l'organe de blocage lorsque le membre de transfert coopère avec l'organe d'actionnement dans la configuration de libération.

Ainsi, il est possible de varier entre la configuration de libération et la configuration de support avec un mécanisme simple.

Selon un mode de réalisation, la tige d'insertion comprend une première surface plane dirigée vers la première surface d'arrêt et/ou une deuxième surface plane dirigée vers la deuxième surface d'arrêt lorsque le membre de transfert coopère avec l'organe d'actionnement dans la configuration de support.

En d'autres termes, la tige d'insertion comprend un ou deux méplats opposés faisant face à la première surface d'arrêt et/ou à la deuxième surface d'arrêt lorsque la tige d'insertion est insérée dans l'organe de blocage.

Ainsi, il est possible de maximiser la surface d'appui entre la tige d'insertion et la surface d'arrêt correspondante, ce qui permet de répartir les contraintes sur une plus grande surface, et ainsi améliorer le contact mécanique entre les deux pièces.

Selon un mode de réalisation, le membre de transfert comprend au moins un dispositif de rappel tendant à ramener la tige d'insertion hors de l'organe de blocage.

Ainsi, la tige d'insertion peut se retirer automatiquement hors de l'organe de blocage lorsque l'organe d'actionnement passe de la configuration de support à la configuration de libération.

Selon un mode de réalisation, l'organe d'actionnement comprend une came présentant dans un plan perpendiculaire à l'axe d'articulation, au moins deux rayons différents.

Par exemple la came comprend un premier rayon correspondant à la configuration de libération, et un deuxième rayon strictement supérieur au premier rayon correspondant à la configuration de support.

De cette manière, il est possible de placer l'organe d'actionnement dans la configuration de support ou dans la configuration de libération en fonction de l'angle qu'il forme avec le membre de transfert.

Selon un mode de réalisation, la came présente un rayon constant égal au premier rayon sur un premier intervalle angulaire compté autour de l'axe d'articulation, et un autre rayon constant égal au deuxième rayon sur un deuxième intervalle angulaire compté autour de l'axe d'articulation.

Par exemple, la configuration de support peut correspondre à la position de la came lorsqu'elle coopère avec le membre de transfert au niveau d'une partie présentant le deuxième rayon, et la configuration de libération peut correspondre à la position de la came lorsqu'elle coopère avec le membre de transfert au niveau d'une partie présentant le premier rayon.

Selon un mode de réalisation, le membre de transfert comprend un élément poussoir solidaire en translation avec la tige d'insertion, et configuré pour coopérer avec la came, notamment par glissement ou roulement.

Ainsi, l'élément poussoir permet de convertir le mouvement de rotation à rayon variable de la came en un mouvement de translation de la tige d'insertion. De cette manière, la position relative de l'organe d'actionnement par rapport au membre de transfert par rapport au bras principal) permet de varier automatiquement entre la configuration de libération et la configuration de support.

Selon un mode de réalisation, l'élément poussoir est un galet.

De manière avantageuse, l'utilisation de l'acier comme matériau constitutif de la came et de l'élément poussoir permet d'avoir un contact d'acier sur acier, ce qui confère une plus grande longévité des pièces en frottement l'une sur l'autre.

Le but de l'invention peut également être atteint grâce à la mise en oeuvre d'un système de support et de guidage pour tronçonneuse de rails comprenant :
- un étau de fixation au rail présentant une première surface de butée et une deuxième surface de butée définissant entre elles un secteur angulaire principal ;
- un bras principal articulé par rapport à l'étau de fixation autour d'au moins un axe principal et apte à pivoter angulairement par rapport à l'étau de fixation dans le secteur angulaire principal ;
- un bras de support comprenant d'une part une portion de fixation destinée à permettre la fixation de la tronçonneuse de rails, et d'autre part une portion d'articulation montée pivotante par rapport au bras principal autour d'un axe d'articulation, et
- un dispositif de réglage de course angulaire du type d'un de ceux décrits précédemment.

Les dispositions précédemment décrites permettent de proposer un système de support et de guidage pour tronçonneuse de rails permettant d'avoir un support du poids de la tronçonneuse de rails lorsqu'elle coupe le rail transversalement par rapport à la direction d'élongation du rail.

Le système de support et de guidage peut en outre présenter une ou plusieurs des caractéristiques suivantes, prises seules ou en combinaison.

Selon un mode de réalisation, le bras principal est monté pivotant par rapport à l'étau de fixation par rapport à l'axe principal.

Selon un mode de réalisation, l'étau de fixation au rail comprend l'organe de blocage.

Ainsi, la fonction de blocage est portée par un seul élément constitutif du système de support et de guidage.

Selon un mode de réalisation, le secteur angulaire principal est strictement plus grand que le ou les secteur(s) angulaire(s) de support.

De cette manière, le système de support et de guidage permet également d'avoir une grande amplitude de coupe lorsque la tronçonneuse de rails coupe la partie haute du rail.

Selon un mode de réalisation, une valeur du secteur angulaire principal est comprise entre 55° et 75°, et plus particulièrement entre 63° et 65°, et notamment sensiblement égale à 64°.

Ainsi, il est possible de garantir une amplitude de mouvement suffisante pour opérer une découpe du rail, au niveau de sa partie haute.

Selon un mode de réalisation, l'étau de fixation comprend un premier mors fixe et un deuxième mors mobile en pivotement par rapport à l'étau de fixation autour d'un axe de verrouillage, l'étau de fixation comprenant un dispositif de verrouillage configuré pour bloquer en rotation le deuxième mors lorsqu'il s'éloigne du premier mors.

De cette manière, le dispositif de verrouillage permet de serrer le rail entre le premier mors et le deuxième mors.

Selon un mode de réalisation, le dispositif de verrouillage comprend un élément d'appui amovible, et une vis de serrage, la vis de serrage étant configurée pour bloquer en rotation le deuxième mors lorsqu'elle prend appui sur l'élément d'appui.

Ainsi, il est possible de serrer le deuxième mors par serrage de la vis de serrage lorsqu'elle prend appui sur l'élément d'appui. Alternativement, il est possible d'effectuer un desserrage rapide de l'étau de fixation en retirant l'élément d'appui.

### Description sommaire des dessins

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
[Fig. 1] La figure 1 est une vue schématique d'un système de support et de guidage ne faisant pas apparaitre le dispositif de réglage de course angulaire, selon un mode de réalisation particulier de l'invention.
[Fig. 2] La figure 2 est une vue schématique d'un système de support et de guidage selon un mode de réalisation particulier de l'invention.
[Fig. 3] La figure 3 est une vue schématique d'un système de support et de guidage selon un autre mode de réalisation de l'invention dans la configuration de libération.
[Fig. 4] La figure 4 est une vue schématique du système de support et de guidage de la figure 3 dans trois configurations de support différentes.
[Fig. 5] La figure 5 est une vue schématique d'un organe de blocage pour le dispositif de réglage de course angulaire des figures 3 et 4.
[Fig. 6] La figure 6 est une vue schématique d'un organe d'actionnement correspondant à l'organe de blocage de la figure 5.
[Fig. 7] La figure 7 est une vue schématique d'un membre de transfert selon un mode de réalisation particulier de l'invention.

### Description détaillée

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.

Comme on peut le voir sur les figures, l'invention concerne un dispositif de réglage de course angulaire 10 destiné à équiper un système de support et de guidage 1 pour tronçonneuse de rails ainsi qu'un tel système de support et de guidage 1.

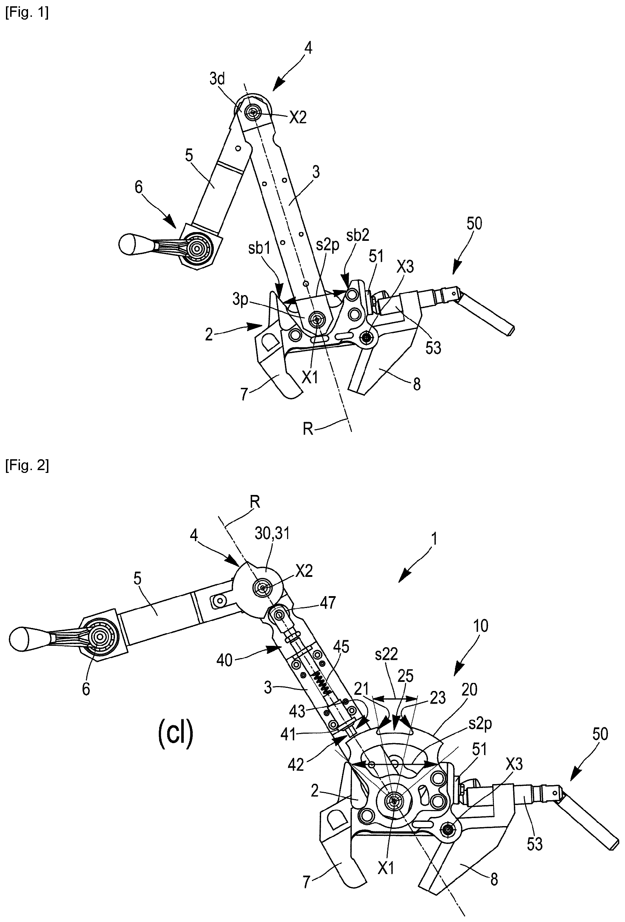

Comme on peut le voir sur la figure 1, le système de support et de guidage 1 comprend un étau de fixation 2 au rail. L'étau de fixation 2 comprend généralement une première partie dont la fonction est d'assurer une fixation avec le rail. Cette partie peut comprendre un premier mors 7 fixe et un deuxième mors 8 mobile, définissant entre eux une ouverture configurée pour permettre l'introduction du rail. Le deuxième mors 8 est mobile en pivotement par rapport à l'étau de fixation 2 autour d'un axe de verrouillage X3, qui est sensiblement parallèle à un axe d'élongation du rail, et notamment sensiblement perpendiculaire à un axe vertical noté « Z ». Le premier mors 7 peut donc servir à prendre appui sur le rail, et le deuxième mors 8 peut être déplacé pour pincer le rail et effectuer ainsi la fixation de l'étau de fixation 2 au rail.

De manière avantageuse, l'étau de fixation 2 peut comprendre un dispositif de verrouillage 50 configuré pour bloquer en rotation le deuxième mors 8 lorsqu'il s'éloigne du premier mors 7. Plus particulièrement, le dispositif de verrouillage 50 peut comprendre une vis de serrage 53 configurée pour appuyer directement ou indirectement sur le deuxième mors 8, pour le rapprocher du premier mors 7, ou bloquer son éloignement du premier mors 7. De cette manière, le dispositif de verrouillage 50 permet de serrer le rail entre le premier mors 7 et le deuxième mors 8. Le dispositif de verrouillage 50 peut également comprendre un élément d'appui 51 amovible, agencé entre le deuxième mors 8 et la vis de serrage 53. La vis de serrage 53 est alors configurée pour bloquer en rotation le deuxième mors 8 lorsqu'elle prend appui sur l'élément d'appui 51. Ainsi, il est possible de serrer le deuxième mors 8 par serrage de la vis de serrage 53 par l'intermédiaire de l'élément d'appui 51. Alternativement, il est possible d'effectuer un desserrage rapide de l'étau de fixation 2 en retirant l'élément d'appui 51.

Du côté opposé aux mors 7, 8, se trouve une deuxième partie de l'étau de fixation 2 présentant une première surface de butée sb1 et une deuxième surface de butée sb2 définissant entre elles un secteur angulaire principal s2p. Le secteur angulaire principal s2p définit donc une ouverture tournée du côté opposé à celle formée par le premier mors 7 et le deuxième mors 8.

Le système de support et de guidage 1 comprend en outre un bras principal 3 articulé par rapport à l'étau de fixation 2 autour d'au moins un axe principal X1. Le bras principal 3 est donc monté pivotant par rapport à l'étau de fixation 2 par rapport à l'axe principal X1. Généralement, l'axe principal X1 est sensiblement parallèle à un axe d'élongation du rail, il est donc également sensiblement parallèle à l'axe de verrouillage X3. Le bras principal 3 peut s'étendre entre une portion proximale 3p disposée au niveau de l'axe principal X1, et une portion distale 3d, et est apte à pivoter angulairement par rapport à l'étau de fixation 2 dans le secteur angulaire principal s2p. Par exemple, une valeur du secteur angulaire principal s2p est comprise entre 55° et 75°, et plus particulièrement entre 63° et 65°, et notamment sensiblement égale à 64°. Ainsi, il est possible de garantir une amplitude de mouvement suffisante pour opérer une découpe du rail, au niveau de sa partie haute.

Le système de support et de guidage 1 comprend également un bras de support 5 comprenant d'une part une portion de fixation 6 destinée à permettre la fixation de la tronçonneuse de rails et d'autre part une portion d'articulation 4 montée pivotante par rapport au bras principal 3 autour d'un axe d'articulation X2.

Comme on peut le voir sur le mode de réalisation représenté sur la figure 1, le bras de support 5 est articulé avec le bras principal 3 au niveau de la partie distale 3d du bras principal 3, autour de l'axe d'articulation X2. Généralement, l'axe d'articulation X2 est sensiblement parallèle à l'axe d'élongation du rail, il est donc sensiblement parallèle à l'axe principal X1, et/ou à l'axe de verrouillage X3.

Le système de support et de guidage 1 comprend enfin un dispositif de réglage de course angulaire 10 qui n'est pas représenté sur la figure 1 pour en faciliter la clarté, et qui sera décrit ci-après.

Les dispositions précédemment décrites permettent de proposer un système de support et de guidage 1 pour tronçonneuse de rails permettant d'avoir un support du poids de la tronçonneuse de rails lorsqu'elle coupe le rail transversalement par rapport à la direction d'élongation du rail.

Les figures 2 à 4 illustrent deux modes de réalisation du système de support et de guidage 1 dans lequel le dispositif de réglage de course angulaire 10 est représenté.

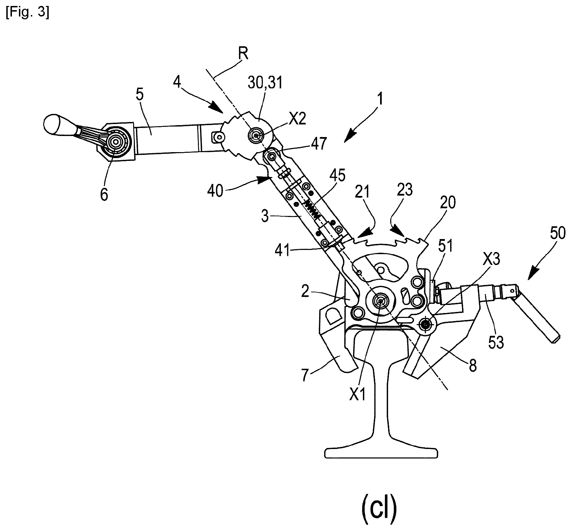

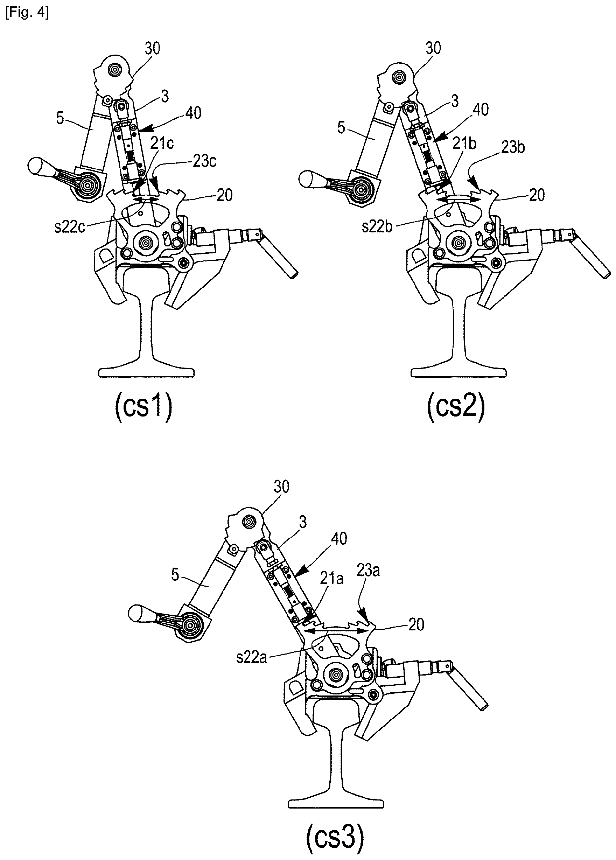

Le dispositif de réglage de course angulaire 10 comprend tout d'abord un organe de blocage 20 présentant au moins une première surface d'arrêt 21 et au moins une deuxième surface d'arrêt 23. Comme cela est illustré sur la figure 1, il est possible que l'organe de blocage 20 ne comprenne qu'une seule première surface d'arrêt 21, et une seule deuxième surface d'arrêt 23. Une telle construction n'est pas limitative, et il est possible que l'organe de blocage 20 comprenne plusieurs surfaces d'arrêt 21, 23. Les figures 3 et 4 illustrent d'ailleurs un mode de réalisation dans lequel l'organe de blocage 20 comprend trois premières surfaces d'arrêt 21a, 21b, 21c, et trois deuxièmes surface d'arrêt 23a, 23b, et 23c. Quel que soit le mode de réalisation considéré, ces surfaces d'arrêts 21, 23 définissent entre elles un secteur angulaire de support s22.

De manière générale, le ou les secteurs angulaires de support s22 s'étendent autour de l'axe vertical Z, correspondant à la direction de la gravité. Ainsi, il est possible de maximiser le support du poids de la tronçonneuse par le bras principal 3. Par exemple le secteur angulaire de support s22 est centré par rapport à l'axe vertical Z. Généralement, le secteur angulaire de support est strictement plus petit que le secteur angulaire principal s2p. De cette manière, le système de support et de guidage 1 permet également d'avoir une grande amplitude de coupe lorsque la tronçonneuse de rails coupe la partie haute du rail. Bien que cela ne soit pas limitatif, il est possible qu'une valeur du secteur angulaire de support s22 soit comprise entre 15° et 30°, et plus particulièrement entre 18° et 22°, et notamment sensiblement égale à 20°. Ainsi, il est possible de garantir une amplitude de mouvement suffisante pour opérer une découpe du rail, tout en limitant suffisamment en pivotement le bras principal 3 pour supporter une plus grande partie du poids de la tronçonneuse de rails.

Selon un mode de réalisation non représenté, il est possible que l'étau de fixation 2 au rail comprenne l'organe de blocage 20. Par exemple, l'organe de blocage 20 peut être ménagé dans la matière constitutive de l'étau de fixation 2 pour former plusieurs ouvertures présentant des angles d'ouverture différents, et former ainsi le secteur angulaire principal s2p, et les secteurs angulaires de support s22. Ainsi, la fonction de blocage est portée par un seul élément constitutif du système de support et de guidage 1.

Il est donc bien compris que l'organe de blocage 20 et l'étau peuvent être compris sur la même pièce, ou peuvent être deux pièces distinctes.

Comme indiqué précédemment, les figures 3 et 4 illustrent un mode de réalisation dans lequel l'organe de blocage 20 comprend une pluralité de secteurs angulaires de support s22, définis chacun respectivement par une première surface d'arrêt 21 et une deuxième surface d'arrêt 23. Afin de permettre une fonction de blocage progressive par l'organe de blocage 20, il est avantageux qu'une valeur angulaire des secteurs angulaires de support s22 diminue en se rapprochant de l'axe principal X1.

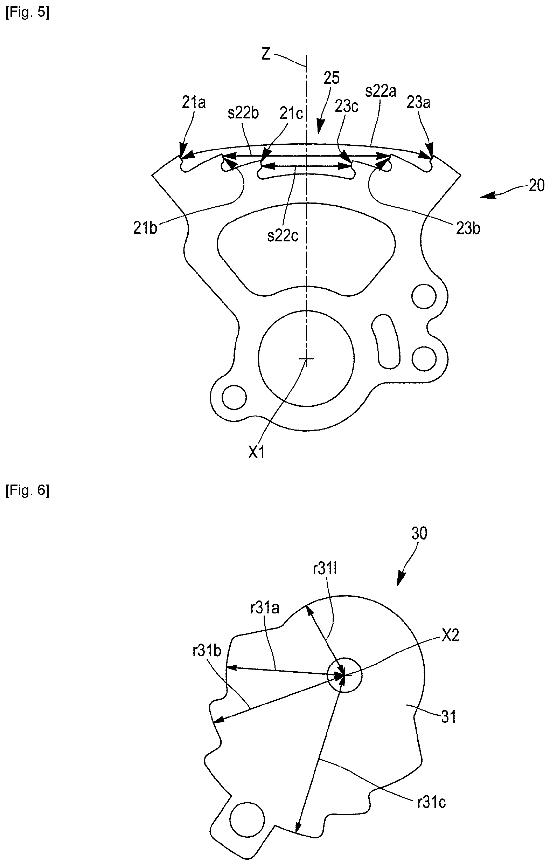

Comme cela est illustré sur la figure 5, l'organe de blocage 20 peut comprendre :
- un secteur angulaire de support étendu s22a, défini par une première surface d'arrêt externe 21a et une deuxième surface d'arrêt externe 23a ;
- un secteur angulaire de support intermédiaire s22b strictement plus petit que le secteur angulaire de support étendu s22a, et défini par une première surface d'arrêt intermédiaire 21b et une deuxième surface d'arrêt intermédiaire 23b ; et
- un secteur angulaire de support restreint s22c plus petit que le secteur angulaire de support intermédiaire s22b, et défini par une première surface d'arrêt interne 23c et une deuxième surface d'arrêt interne 23c.

Par exemple, le secteur angulaire de support étendu s22a peut être sensiblement égal à 65°, le secteur angulaire de support intermédiaire s22b peut être sensiblement égal à 45°, et le secteur angulaire de support restreint s22c peut être sensiblement égal à 22°.

Il est donc bien compris que le nombre de secteurs angulaires de support s22 n'est pas limité est que chaque paire associant une première surface d'arrêt 21 avec la deuxième surface d'arrêt 23 qui lui fait directement face définit un des secteurs angulaires de support s22.

Selon une variante non limitative correspondant aux modes de réalisation des figures 2 à 5, l'organe de blocage 20 peut comprendre une plaque métallique s'étendant dans un plan d'extension sensiblement perpendiculaire à l'axe principal X1. Cette plaque métallique peut comprendre un décrochement 25 formant d'une part ladite au moins une première surface d'arrêt 21 et d'autre part ladite au moins une deuxième surface d'arrêt 23. De cette manière, l'organe de blocage 20 présente un encombrement plus faible, et un poids réduit.

De manière avantageuse, la plaque métallique est une plaque en acier. Ainsi, il est possible de proposer un organe de blocage 20 qui soit à la fois compact et résistant pour supporter le blocage du bras principal 3 lorsqu'il s'appuie sur la première surface d'arrêt 21 ou sur la deuxième surface d'arrêt 23 lors de la coupe du rail.

Le dispositif de réglage de course angulaire 10 comprend également un organe d'actionnement 30 destiné à être solidaire en pivotement avec le bras de support 5 et à être disposé au niveau de la portion d'articulation 4 du bras de support 5. Il est possible que l'organe d'actionnement 30 et le bras de support 5 forment une seule pièce, ou soit deux pièces distinctes.

L'organe d'actionnement 30 est configuré pour occuper, par variation angulaire par rapport au bras principal 3, au moins une configuration de support cs1, cs2, cs3 ou une configuration de libération notée « cl », où chaque configuration de support cs1, cs2, cs3 correspond à un secteur angulaire de support s22.

Par exemple, l'organe d'actionnement 30 peut comprendre une came 31 présentant dans un plan perpendiculaire à l'axe d'articulation X2, au moins deux rayons r31a, r31b, r31c, r31l différents. Sur le mode de réalisation de la figure 2, la came 31 comprend un premier rayon r31l correspondant à la configuration de libération cl, et un deuxième rayon r31a strictement supérieur au premier rayon r31l correspondant à la configuration de support cs1. Sur le mode de réalisation alternatif de la figure 6, la came 31 comprend un premier rayon r31l correspondant à la configuration de libération cl, et trois autres rayons r31a, r31b, r31c correspondant à trois configurations de support cs1, cs2, cs3 différentes. Quel que soit la variante choisie, il est possible de placer l'organe d'actionnement 30 dans un des configurations de support cs1, cs2, cs3 ou dans la configuration de libération cl, en fonction de l'angle qu'il forme avec le membre de transfert 40. Les figures 2 et 3 illustrent notamment l'organe d'actionnement 30 dans la configuration de libération cl, et la figure 4 illustre l'organe d'actionnement dans les configurations de support cs1, cs2, et cs3.

De manière avantageuse, il peut être prévu que la came 31 présente un rayon constant égal au premier rayon r31l sur un premier intervalle angulaire compté autour de l'axe d'articulation X2, et un autre rayon constant égal au deuxième rayon r31a, r31b, r31c sur un deuxième intervalle angulaire compté autour de l'axe d'articulation X2.

Enfin, le dispositif de réglage de course angulaire 10 comprend un membre de transfert 40 destiné à être solidaire en pivotement avec le bras principal 3 et coopérant d'une part avec l'organe d'actionnement 30 et d'autre part avec l'organe de blocage 20.

Lorsque le membre de transfert 40 coopère avec l'organe d'actionnement 30 dans la configuration de support cs1, cs2, cs3, le membre de transfert 40 est configuré pour prendre appui sur la première surface d'arrêt 21 ou sur la deuxième surface d'arrêt 23 de sorte à limiter en pivotement le bras principal 3 dans le secteur angulaire de support s22 correspondant à ladite configuration de support cs1, cs2, cs3.

Alternativement, le membre de transfert 40 est configuré pour permettre un pivotement libre du bras principal 3 autour de l'axe principal X1 lorsque le membre de transfert 40 coopère avec l'organe d'actionnement 30 dans la configuration de libération cl. Il est donc bien compris que dans la configuration de libération cl, le pivotement du bras principal 3 autour de l'axe principal X1 n'est pas limité par l'organe de blocage 20. Il est toutefois possible que le pivotement du bras principal 3 autour de l'axe principal X1 soit limité par les surfaces de butées sb1, sb2 de l'étau de fixation 2.

De manière générale, le nombre de secteurs angulaires de support s22 est égal au nombre de configurations de support cs1, cs2, cs3. Dans le mode de réalisation illustré par la figure 4 :
- le secteur angulaire de support étendu s22a correspond à la configuration de support cs1, et au rayon r31a de la came 31 ;
- le secteur angulaire de support intermédiaire s22b correspond à la configuration de support cs2 et au rayon r31b de la came 31 ; et
- le secteur angulaire de support restreint s22c correspond à la configuration de support cs3 et au rayon r31c de la came 31.

Avantageusement, le membre de transfert 40 comprend une tige d'insertion 41, mobile en translation selon une direction radiale notée « R » définie perpendiculairement à l'axe principal X1, ladite tige d'insertion 41 étant configurée pour faire saillie vers l'organe de blocage 20 entre la première surface d'arrêt 21 et la deuxième surface d'arrêt 23 lorsque le membre de transfert 40 coopère avec l'organe d'actionnement 30 dans la configuration de support cs1, cs2, cs3, et pour se rétracter hors de l'organe de blocage 20 lorsque le membre de transfert 40 coopère avec l'organe d'actionnement 30 dans la configuration de libération cl. Ainsi, il est possible de varier entre la configuration de libération cl et la configuration de support cs1, cs2, cs3 avec un mécanisme simple.

Selon les modes de réalisation illustrés sur les figures 2 à 4, la tige d'insertion 41 fait donc le lien entre la came 31 et l'organe de blocage 20. Plus le rayon de la came est grand, plus la tige d'insertion 41 fait saille entre les premières et deuxième surfaces 21, 23 de l'organe de blocage 20, et plus la valeur du secteur angulaire de support s22 correspondant est petite.

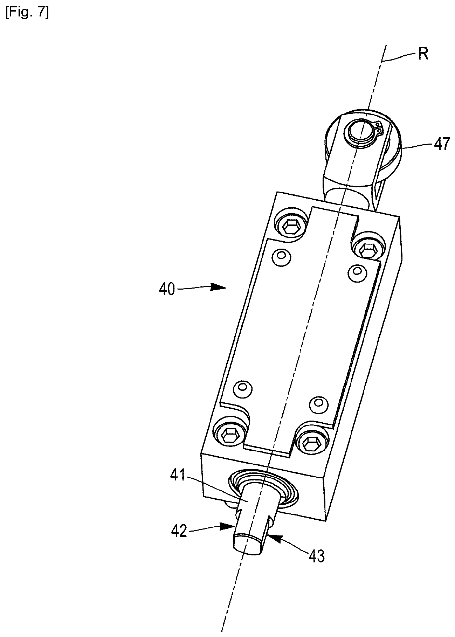

La figure 7 illustre plus précisément un membre de transfert 40 selon un mode de réalisation de l'invention 40. Sur cette variante, la tige d'insertion 41 présente une première surface plane 42 dirigée vers la première surface d'arrêt 21 et/ou une deuxième surface plane 43 dirigée vers la deuxième surface d'arrêt 23 lorsque le membre de transfert 40 coopère avec l'organe d'actionnement 30 dans la configuration de support cs1, cs2, cs3. En d'autres termes, la tige d'insertion 41 comprend un ou deux méplats opposés faisant face à la première surface d'arrêt 21 et/ou à la deuxième surface d'arrêt 23 lorsque la tige d'insertion 41 est insérée dans l'organe de blocage 20. Ainsi, il est possible de maximiser la surface d'appui entre la tige d'insertion 41 et la surface d'arrêt correspondante, ce qui permet de répartir les contraintes sur une plus grande surface, et ainsi améliorer le contact mécanique entre les deux pièces.

Par ailleurs, et comme cela est visible sur les figures 2 et 3, le membre de transfert 40 peut comprendre au moins un dispositif de rappel 45 tendant à ramener la tige d'insertion 41 hors de l'organe de blocage 20. En d'autres termes, suivant la configuration de l'organe d'actionnement 30, le dispositif de rappel 45 tend à ramener la tige d'insertion 41 dans le secteur angulaire de support s22 correspondant à ladite configuration de support, ou hors des secteurs angulaires de support s22 si l'organe d'actionnement 30 est dans la configuration de libération cl. Ainsi, la tige d'insertion 41 peut se retirer automatiquement hors de l'organe de blocage 20 lorsque l'organe d'actionnement 30 passe de la configuration de support cs1, cs2, cs3 à la configuration de libération cl.

Enfin, le membre de transfert 40 peut comprendre un élément poussoir 47 solidaire en translation avec la tige d'insertion 41, et configuré pour coopérer avec la came 31, notamment par glissement ou roulement. Par exemple, l'élément poussoir 47 est un galet. Ainsi, l'élément poussoir 47 permet de convertir le mouvement de rotation à rayon variable de la came 31 en un mouvement de translation de la tige d'insertion 41. De cette manière, la position relative de l'organe d'actionnement 30 par rapport au membre de transfert 40 (i.e du bras de support 5 par rapport au bras principal 3) permet de varier automatiquement entre la configuration de libération cl et la configuration de support cs1, cs2, cs3.

De manière générale, au moins un élément choisi parmi l'organe de blocage 20, l'organe d'actionnement 30 et le membre de transfert 40 comprend de l'acier. De cette manière, il est possible de proposer un dispositif de réglage de course angulaire 10 plus résistant mécaniquement, ce qui permet de supporter la masse de la tronçonneuse de rails. Plus particulièrement, l'utilisation de l'acier comme matériau constitutif de la came 31 et de l'élément poussoir 47 permet d'avoir un contact d'acier sur acier, ce qui confère une plus grande longévité des pièces en frottement l'une sur l'autre.

L'ensemble des dispositions précédemment décrites permettent de proposer un dispositif de réglage de course angulaire 10 permettant de bloquer le bras principal 3 du système de support et de guidage 1 dans un secteur angulaire de support s22, ce qui permet de supporter au moins partiellement le poids de la tronçonneuse de rail lorsqu'elle effectue des mouvements transversaux par rapport à une direction d'élongation du rail. Le travail de l'utilisateur de la tronçonneuse de rails est donc facilité, moins pénible, et plus sécuritaire.

## Revendications

1. Dispositif de réglage de course angulaire (10) destiné à équiper un système de support et de guidage (1) pour tronçonneuse de rails, ledit système de support et de guidage (1) comprenant un étau de fixation (2) au rail, un bras principal (3) articulé monté pivotant par rapport à l'étau de fixation (2) autour d'au moins un axe principal (X1), et un bras de support (5) comprenant d'une part une portion de fixation (6) destinée à permettre la fixation de la tronçonneuse de rails et d'autre part une portion d'articulation (4) montée pivotante par rapport au bras principal (3) autour d'un axe d'articulation (X2), le dispositif de réglage de course angulaire (10) comprenant :
- un organe de blocage (20) présentant au moins une première surface d'arrêt (21) et au moins une deuxième surface d'arrêt (23), une première surface d'arrêt (21) et une deuxième surface d'arrêt (23) définissant entre elles un secteur angulaire de support (s22) ;
- un organe d'actionnement (30) destiné à être solidaire en pivotement avec le bras de support (5) et à être disposé au niveau de la portion d'articulation (4) du bras de support (5), l'organe d'actionnement (30) étant configuré pour occuper, par variation angulaire par rapport au bras principal (3), au moins une configuration de support (cs1, cs2, cs3) ou une configuration de libération (cl), où chaque configuration de support (cs1, cs2, cs3) correspond à un secteur angulaire de support (s22) ; et
- un membre de transfert (40) destiné à être solidaire en pivotement avec le bras principal (3) et coopérant d'une part avec l'organe d'actionnement (30) et d'autre part avec l'organe de blocage (20), le membre de transfert (40) étant configuré pour prendre appui sur la première surface d'arrêt (21) ou sur la deuxième surface d'arrêt (23) de sorte à limiter en pivotement le bras principal (3) dans le secteur angulaire de support (s22) correspondant, lorsque le membre de transfert (40) coopère avec l'organe d'actionnement (30) dans la configuration de support (cs1, cs2, cs3) correspondant audit secteur angulaire de support (s22), et étant configuré pour permettre un pivotement libre du bras principal (3) autour de l'axe principal (X1) lorsque le membre de transfert (40) coopère avec l'organe d'actionnement (30) dans la configuration de libération (cl).

2. Dispositif de réglage de course angulaire (10) selon la revendication 1, dans lequel une valeur du secteur angulaire de support (s22) est comprise entre 15° et 30°, et plus particulièrement entre 18° et 22°, et notamment sensiblement égale à 20°.

3. Dispositif de réglage de course angulaire (10) selon l'une quelconque des revendications 1 ou 2, dans lequel l'organe de blocage (20) comprend une plaque métallique comprenant un décrochement (25), ledit décrochement (25) formant d'une part la première surface d'arrêt (21) et d'autre part la deuxième surface d'arrêt (23).

4. Dispositif de réglage de course angulaire (10) selon l'une quelconque des revendications 1 à 3, dans lequel le membre de transfert (40) comprend une tige d'insertion (41), mobile en translation selon une direction radiale (R) définie perpendiculairement à l'axe principal (X1), ladite tige d'insertion (41) étant configurée pour faire saillie vers l'organe de blocage (20) entre la première surface d'arrêt (21) et la deuxième surface d'arrêt (23) lorsque le membre de transfert (40) coopère avec l'organe d'actionnement (30) dans la configuration de support (cs1, cs2, cs3), et pour se rétracter hors de l'organe de blocage (20) lorsque le membre de transfert (40) coopère avec l'organe d'actionnement (30) dans la configuration de libération (cl).

5. Dispositif de réglage de course angulaire (10) selon la revendication 4, dans lequel la tige d'insertion (41) comprend une première surface plane (42) dirigée vers la première surface d'arrêt (21) et/ou une deuxième surface plane (43) dirigée vers la deuxième surface d'arrêt (23) lorsque le membre de transfert (40) coopère avec l'organe d'actionnement (30) dans la configuration de support (cs1, cs2, cs3).

6. Dispositif de réglage de course angulaire (10) selon l'une quelconque des revendications 4 ou 5, dans lequel le membre de transfert (40) comprend au moins un dispositif de rappel (45) tendant à ramener la tige d'insertion (41) hors de l'organe de blocage (20).

7. Dispositif de réglage de course angulaire (10) selon l'une quelconque des revendications 1 à 6, dans lequel l'organe d'actionnement (30) comprend une came (31) présentant dans un plan perpendiculaire à l'axe d'articulation (X2), au moins deux rayons (r31a, r31b, r31c, r31l) différents.

8. Dispositif de réglage de course angulaire (10) selon l'une quelconque des revendications 4 à 6 et selon la revendication 7, dans lequel le membre de transfert (40) comprend un élément poussoir (47) solidaire en translation avec la tige d'insertion (41), et configuré pour coopérer avec la came (31), notamment par glissement ou roulement.

9. Système de support et de guidage (1) pour tronçonneuse de rails comprenant :
- un étau de fixation (2) au rail présentant une première surface de butée (sb1) et une deuxième surface de butée (sb2) définissant entre elles un secteur angulaire principal (s2p) ;
- un bras principal (3) articulé par rapport à l'étau de fixation (2) autour d'au moins un axe principal (X1) et apte à pivoter angulairement par rapport à l'étau de fixation (2) dans le secteur angulaire principal (s2p) ;
- un bras de support (5) comprenant d'une part une portion de fixation (6) destinée à permettre la fixation de la tronçonneuse de rails, et d'autre part une portion d'articulation (4) montée pivotante par rapport au bras principal (3) autour d'un axe d'articulation (X2), et
- un dispositif de réglage de course angulaire (10) selon l'une quelconque des revendications 1 à 8.

10. Système de support et de guidage (1) selon la revendication 9, dans lequel l'étau de fixation (2) au rail comprend l'organe de blocage (20).

11. Système de support et de guidage (1) selon l'une quelconque des revendications 9 ou 10, dans lequel le secteur angulaire principal (s2p) est strictement plus grand que le ou les secteur(s) angulaire(s) de support (s22).

12. Système de support et de guidage (1) selon l'une quelconque des revendications 9 à 11, dans lequel une valeur du secteur angulaire principal (s2p) est comprise entre 55° et 75°, et plus particulièrement entre 63° et 65°, et notamment sensiblement égale à 64°.

13. Système de support et de guidage (1) selon l'une quelconque des revendications 9 à 12, dans lequel l'étau de fixation (2) comprend un premier mors (7) fixe et un deuxième mors (8) mobile en pivotement par rapport à l'étau de fixation (2) autour d'un axe de verrouillage (X3), l'étau de fixation (2) comprenant un dispositif de verrouillage (50) configuré pour bloquer en rotation le deuxième mors (8) lorsqu'il s'éloigne du premier mors (7).

14. Système de support et de guidage (1) selon la revendication 13, dans lequel le dispositif de verrouillage (50) comprend un élément d'appui (51) amovible, et une vis de serrage (53), la vis de serrage (53) étant configurée pour bloquer en rotation le deuxième mors (8) lorsqu'elle prend appui sur l'élément d'appui (51).
